# EUROPEAN PATENT APPLICATION

(11) **EP 4 787 960 A1**
(43) Date of publication of application: **05.08.2026**
(21) Application number: 24870545.1
(22) Date of filing: 19.09.2024
(51) Int. Cl.: H04W 36/00

(54) **METHOD USED IN COMMUNICATION NODE FOR WIRELESS COMMUNICATION, AND APPARATUS**

(30) Priority: 26.09.2023 CN 202311260218
(71) Applicant: Apogee 5G Global, LLC, Plano, TX 75024 (US)
(72) Inventor: YU, Qiaoling, Shanghai 201206 (CN); XIA, Shushu, Shanghai 201206 (CN); ZHANG, Xiaobo, Shanghai 201206 (CN)
(74) Representative: Gunzelmann, Rainer
(86) International application number: PCT/CN2024/119600
(87) International publication number: WO 2025/067001

(57) **Abstract**

Disclosed in the present application are a method used in a communication node for wireless communication, and an apparatus. A communication node receives a first RRC message, the first RRC message being configured with at least one condition, and the first RRC message comprising configuration information of a first cell; first signaling is received, the first signaling indicating a first condition, and the first signaling being radio signaling of a protocol layer under an RRC sublayer; and the configuration information of the first cell is applied; wherein the first condition is one among the at least one condition, and the action of applying the configuration information of the first cell depends on the first condition being satisfied; and any among the at least one condition is associated with the configuration information of the first cell. The solution provided by the present application facilitates mobility optimization.

## Description

### Technical Field

The present application relates to a transmission method and apparatus in a wireless communication system, and in particular to a method and apparatus for configuring a triggering event.

### Background Art

With the continuous development of wireless communication, the requirements for mobility, transmission delay, and system capacity are becoming increasingly high. In Release-16, 3GPP (the 3rd Generation Partnership Project) introduced conditional handover (CHO), allowing user equipment (UE) to decide to execute handover (on its own) when certain conditions are met, so as to shorten handover interruption time. At the RAN (Radio Access Network) #94e meeting, 3GPP decided to study L1 (Layer 1)/L2 (Layer 2) triggered mobility (LTM) in the "Further NR (New Radio) mobility enhancements" work item (WI).

As future wireless communication gradually evolves towards intelligence, artificial intelligence (AI) and machine learning have been introduced by 3GPP and studied for integration, which can be used for reducing network power consumption and optimizing mobility performance. Under existing protocols, a plurality of triggering events are respectively defined, and different triggering events are configured by the base station for the UE to execute measurement reporting processes, and the UE triggers measurement reporting-related information in different scenarios to meet the mobility requirements.

### Summary of the Invention

In a traditional solution, a base station configures a series of triggering events for measurement reporting for UE through RRC layer messages, with a long configuration period, and configuration delays of the triggering events will cause measurement results to be not necessarily accurate, thereby resulting in inappropriate handover. Through research, the applicant has found that existing configurations of triggering events for measurement reporting have problems such as long configuration periods and insufficiently flexible configurations.

In view of the above problems, the present application provides a solution for configuring a triggering event. In the description of the above problems, an NR system is used as one example, but the present application is also applicable to scenarios such as LTE (Long-Term Evolution) or LTE-A (Long-Term Evolution Advanced) or future 6G systems to achieve technical effects similar to those of the NR system; and further, although the present application provides specific implementations for triggering event updating for measurement reporting in an RRC_CONNECTED state involved in handover, the present application can also be used in scenarios such as an RRC_IDLE state or an RRC_INACTIVE state to achieve technical effects similar to those of configuring triggering events for a measurement reporting process in the RRC connected state. Further, the use of a unified solution for different scenarios also helps to reduce hardware complexity and cost. Further, although the present application provides specific implementations for LTM and CHO scenarios, the present application can also be used in scenarios such as m-TRP m-TA to achieve technical effects similar to those in the LTM and CHO scenarios. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and cost.

As one embodiment, interpretations of terminologies in the present application refer to definitions in the specification protocol TS36 series of 3GPP.

As one embodiment, the interpretations of the terminologies in the present application refer to the definitions in the specification protocol TS37 series of 3GPP.

As one embodiment, the interpretations of the terminologies in the present application refer to the definitions in the specification protocol TS38 series of 3GPP.

It should be noted that, in the absence of conflicts, embodiments and features in the embodiments in any node of the present application may be applied to any other node. In the absence of conflicts, the embodiments and the features in the embodiments of the present application may be arbitrarily combined with each other.

The present application discloses a method used in a first node for wireless communication, characterized by comprising:
receiving a first RRC message, wherein the first RRC message is configured with at least one condition, and the first RRC message comprises configuration information of a first cell; receiving first signaling, wherein the first signaling indicates a first condition, and the first signaling is radio signaling of a protocol layer under an RRC sublayer; and applying the configuration information of the first cell,
wherein the first condition is one among the at least one condition; the behavior of applying the configuration information of the first cell depends on the first condition being satisfied; and any among the at least one condition is associated with the configuration information of the first cell.

As one embodiment, the problem to be solved by the present application comprises: when to trigger measurement reporting.

As one embodiment, the problem to be solved in the present application comprises: how to dynamically configure a triggering event for measurement reporting.

As one embodiment, the problem to be solved in the present application comprises: how to reduce a configuration delay for a triggering event.

As one embodiment, the problem to be solved by the present application comprises: how to optimize mobility of UE.

As one embodiment, characteristics of the above method comprise: the first RRC message being configured with at least one condition, and the first RRC message comprising the configuration information of the first cell.

As one embodiment, benefits of the above method comprise: being conducive to reducing signaling interaction.

As one embodiment, the benefits of the above method comprise: simple implementation of the protocol.

As one embodiment, the characteristics of the above method comprise: the first signaling indicating the first condition, the first signaling is the radio signaling of the protocol layer under the RRC sublayer, and the first condition being one among the at least one condition.

As one embodiment, the benefits of the above method comprise: being conducive to reducing a configuration delay.

As one embodiment, the benefits of the above method comprise: being conducive to implementing a differentiated configuration of UE.

As one embodiment, the benefits of the above method comprise: being conducive to dynamically configuring a triggering event.

As one embodiment, the benefits of the above method comprise: being conducive to data optimization on a UE side.

As one embodiment, the benefits of the above method comprise: being conducive to network self-configuration and self-optimization.

As one embodiment, the characteristics of the above method comprise: the behavior of applying the configuration information of the first cell depending on the first condition being satisfied, and any among the at least one condition being associated with the configuration information of the first cell.

As one embodiment, the benefits of the above method comprise: being conducive to improving robustness of handover.

As one embodiment, the benefits of the above method comprise: being conducive to reducing evaluation time for measurement reporting.

As one embodiment, the benefits of the above method comprise: being conducive to reducing power consumption of UE.

According to one aspect of the present application, it is characterized in that the first RRC message configures one condition identifier for each condition in the at least one condition, and the first signaling comprises a condition identifier of the first condition.

As one embodiment, the characteristics of the above method comprise: the first RRC message configuring one condition identifier for each condition in the at least one condition, which is associated with the condition identifier of the first condition.

As one embodiment, the benefits of the above method comprise: facilitating indication.

According to one aspect of the present application, it is characterized in that the first condition comprises a measurement result for the first cell being greater than a first target threshold; the first RRC message is used for determining that the first target threshold is a first value, and the first RRC message comprises the first value; and the first signaling is used for determining that the first target threshold is a second value, and the first signaling indicates the second value.

As one embodiment, the characteristics of the above method comprise: execution of the first condition depending on the first RRC message and the first signaling.

As one embodiment, the characteristics of the above method comprise: the first target threshold depending on the first RRC message and the first signaling.

As one embodiment, the benefits of the above method comprise: being conducive to improving robustness of handover.

As one embodiment, the benefits of the above method comprise: being conducive to optimization adjustment on a base station side.

According to one aspect of the present application, it is characterized in that the first signaling indicates a second condition, and the second condition is one among another at least one condition; the first RRC message is configured with the another at least one condition, and the first RRC message comprises configuration information of a second cell; and any among the another at least one condition is associated with the configuration information of the second cell.

As one embodiment, the characteristics of the above method comprise: the first signaling indicating a plurality of conditions, the plurality of conditions being different conditions, the first RRC message being configured with the plurality of conditions, the first RRC message comprising configuration information of a plurality of cells, and the plurality of conditions being associated with the configuration information of the plurality of cells respectively.

As one embodiment, the benefits of the above method comprise: being conducive to reducing signaling interaction.

According to one aspect of the present application, it is characterized by comprising:
receiving second signaling, wherein the second signaling indicates a third condition, and the third condition is one among the at least one condition; and removing the first condition from the at least one condition in response to the second signaling being received.

As one embodiment, the problem to be solved by the present application comprises: how to implement a change to the configured at least one condition.

As one embodiment, the characteristics of the above method comprise: the second signaling indicating the third condition, and the third condition is one among the at least one condition; and removing the first condition from the at least one condition in response to the second signaling being received.

As one embodiment, the benefits of the above method comprise: facilitating a base station changing a configured condition.

According to one aspect of the present application, it is characterized by comprising:
initiating a first measurement reporting process in response to a fourth condition being satisfied; and stopping the first measurement reporting process in response to the first signaling being received,
wherein the fourth condition is applied before the first signaling is received; and the fourth condition is one among the at least one condition.

As one embodiment, the characteristics of the above method comprise: the fourth condition is applied before the first signaling is received; initiating the first measurement reporting process in response to the fourth condition being satisfied; and stopping the first measurement reporting process in response to the first signaling being received, and removing a measurement result associated with the fourth condition.

As one embodiment, the characteristics of the above method comprise: the first signaling indicating the fourth condition, and re-initiating the first measurement reporting process in response to the fourth condition being satisfied.

As one embodiment, the benefits of the above method comprise: solving a conflict in a measurement configuration.

As one embodiment, the benefits of the above method comprise: being conducive to improving accuracy of a measurement result.

According to one aspect of the present application, it is characterized by comprising:
updating the first condition in a first UE variable in response to the first signaling being received,
wherein the first UE variable comprises at least the former of the first condition and the configuration information of the first cell.

As one embodiment, the problem to be solved by the present application comprises: how to update a configured condition in the first UE variable.

As one embodiment, the benefits of the above method comprise: being conducive to reducing signaling interaction.

According to one aspect of the present application, it is characterized by comprising:
receiving a first handover command after the first signaling is received,
wherein the first handover command triggers the behavior of applying the configuration information of the first cell.

As one embodiment, the characteristics of the above method comprise: the first RRC message comprising the configuration information of the first cell, and the first handover command triggering the behavior of applying the configuration information of the first cell.

As one embodiment, the benefits of the above method comprise: being conducive to reducing a handover delay.

According to one aspect of the present application, it is characterized in that the first condition being satisfied triggers the behavior of applying the configuration information of the first cell.

As one embodiment, the characteristics of the above method comprise: the first RRC message comprising the configuration information of the first cell, and the first condition being satisfied triggering the behavior of applying the configuration information of the first cell.

As one embodiment, the benefits of the above method comprise: being conducive to reducing signaling interaction.

As one embodiment, the benefits of the above method comprise: being conducive to reducing a handover delay.

The present application discloses a method used in a second node for wireless communication, characterized by comprising:
sending a first RRC message, wherein the first RRC message is configured with at least one condition, and the first RRC message comprises configuration information of a first cell; and sending first signaling, wherein the first signaling indicates a first condition, and the first signaling is radio signaling of a protocol layer under an RRC sublayer,
wherein a recipient of the first signaling applies the configuration information of the first cell; the first condition is one among the at least one condition; the recipient of the first signaling applying the configuration information of the first cell depends on the first condition being satisfied; and any among the at least one condition is associated with the configuration information of the first cell.

According to one aspect of the present application, it is characterized in that the first RRC message configures one condition identifier for each condition in the at least one condition, and the first signaling comprises a condition identifier of the first condition.

According to one aspect of the present application, it is characterized in that the first condition comprises a measurement result for the first cell being greater than a first target threshold; the first RRC message is used for determining that the first target threshold is a first value, and the first RRC message comprises the first value; and the first signaling is used for determining that the first target threshold is a second value, and the first signaling indicates the second value.

According to one aspect of the present application, it is characterized in that the first signaling indicates a second condition, and the second condition is one among another at least one condition; the first RRC message is configured with the another at least one condition, and the first RRC message comprises configuration information of a second cell; and any among the another at least one condition is associated with the configuration information of the second cell.

According to one aspect of the present application, it is characterized by comprising:
a second transmitter, sending second signaling, wherein the second signaling indicates a third condition, and the third condition is one among the at least one condition; and the recipient of the first signaling removing the first condition from the at least one condition in response to the second signaling being received.

According to one aspect of the present application, it is characterized by comprising:
the recipient of the first signaling initiating a first measurement reporting process in response to a fourth condition being satisfied; and the recipient of the first signaling stopping the first measurement reporting process in response to the first signaling being received,
wherein the fourth condition is applied before the first signaling is received; and the fourth condition is one among the at least one condition.

According to one aspect of the present application, it is characterized by comprising:
the recipient of the first signaling updating the first condition in a first UE variable in response to the first signaling being received,
wherein the first UE variable comprises at least the former of the first condition and the configuration information of the first cell.

According to one aspect of the present application, it is characterized by comprising:
the second transmitter, sending a first handover command after the first signaling is sent,
wherein the first handover command triggers the behavior of applying the configuration information of the first cell.

According to one aspect of the present application, it is characterized in that the first condition being satisfied triggers the behavior of applying the configuration information of the first cell.

The present application discloses a first node for wireless communication, characterized by comprising:
a first processor, receiving a first RRC message, wherein the first RRC message is configured with at least one condition, and the first RRC message comprises configuration information of a first cell; receiving first signaling, wherein the first signaling indicates a first condition, and the first signaling is radio signaling of a protocol layer under an RRC sublayer; and applying the configuration information of the first cell,
wherein the first condition is one among the at least one condition; the behavior of applying the configuration information of the first cell depends on the first condition being satisfied; and any among the at least one condition is associated with the configuration information of the first cell.

The present application discloses a second node for wireless communication, characterized by comprising:
a second transmitter, sending a first RRC message, wherein the first RRC message is configured with at least one condition, and the first RRC message comprises configuration information of a first cell; and sending first signaling, wherein the first signaling indicates a first condition, and the first signaling is radio signaling of a protocol layer under an RRC sublayer,
wherein a recipient of the first signaling applies the configuration information of the first cell; the first condition is one among the at least one condition; the recipient of the first signaling applying the configuration information of the first cell depends on the first condition being satisfied; and any among the at least one condition is associated with the configuration information of the first cell.

As one embodiment, compared with a traditional solution, the present application has the following advantages:
-. being conducive to self-configuration and self-optimization for mobility;
-. being conducive to improving a probability of successful handover;
-. being conducive to improving reliability of handover between cells;
-. being conducive to dynamically updating a triggering event for measurement reporting;
-. being conducive to reducing a delay of measurement reporting;
-. being conducive to improving configuration flexibility of measurement reporting; and
-. being conducive to reducing a handover delay.

### Brief Description of the Drawings

Other features, purposes and advantages of the present application will become more apparent by reading the detailed description of the non-limiting embodiments in the following drawings with reference to them:
FIG. 1 shows a flowchart of communication of a first node according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram of first signaling comprising a condition identifier of a first condition according to one embodiment of the present application;
FIG. 7 shows a schematic diagram of a first target threshold depending on a first RRC message and first signaling according to one embodiment of the present application;
FIG. 8 shows a schematic diagram of first signaling indicating a second condition according to one embodiment of the present application;
FIG. 9 shows a schematic diagram of second signaling indicating a third condition and removing a first condition according to one embodiment of the present application;
FIG. 10 shows a flowchart of stopping a first measurement reporting process according to one embodiment of the present application;
FIG. 11 shows a flowchart of updating a first UE variable according to one embodiment of the present application;
FIG. 12 shows a schematic diagram of a first handover command triggering the behavior of applying configuration information of a first cell according to one embodiment of the present application;
FIG. 13 shows a schematic diagram of a first condition being satisfied triggering the behavior of applying configuration information of a first cell according to one embodiment of the present application;
FIG. 14 shows a structural block diagram of a processing apparatus used in a first node according to one embodiment of the present application;
FIG. 15 shows a structural block diagram of a processing apparatus in a second node according to one embodiment of the present application;
FIG. 16 shows a schematic diagram of an artificial intelligence processing system according to one embodiment of the present application; and
FIG. 17 shows a schematic diagram of an artificial intelligence processing system according to another embodiment of the present application.

### Detailed Description of Embodiments

The technical solutions of the present application will be further described in detail below in conjunction with the drawings. It should be noted that, in the absence of conflicts, embodiments and features in the embodiments in the present application can be arbitrarily combined with each other.

### Embodiment 1

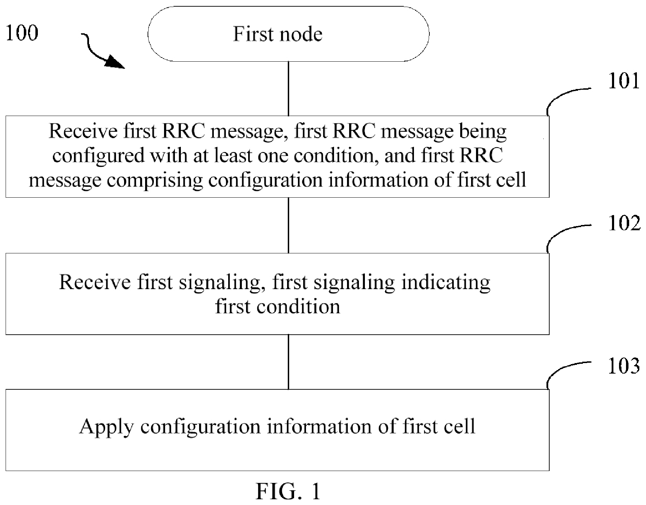

Embodiment 1 illustrates a flowchart of communication of a first node according to one embodiment of the present application, as shown in FIG. 1. In FIG. 1, each block represents one step. It is particularly emphasized that the order of the blocks in the figure does not represent the temporal relationship between the steps represented.

In Embodiment 1, the first node in the present application, in step 101, receives a first RRC message, wherein the first RRC message is configured with at least one condition, and the first RRC message comprises configuration information of a first cell; in step 102, receives first signaling, wherein the first signaling indicates a first condition, and the first signaling is radio signaling of a protocol layer under an RRC sublayer; and in step 103, applies the configuration information of the first cell, wherein the first condition is one among the at least one condition; the behavior of applying the configuration information of the first cell depends on the first condition being satisfied; and any among the at least one condition is associated with the configuration information of the first cell.

As one embodiment, the first RRC message comprises at least one RRC message.

As one embodiment, the first RRC message comprises at least one RRC IE (Information Element).

As one embodiment, a first RRC information block comprises at least one RRC field.

As one embodiment, the first RRC message is UE-Specific.

As one embodiment, the first RRC message is transmitted through a DCCH (Dedicated Control Channel).

As one embodiment, the first RRC message is transmitted through an SCCH (Sidelink Control Channel).

As one embodiment, the first RRC message is transmitted through an SRB1 (Signaling Radio Bearer 1).

As one embodiment, the first RRC message is transmitted through an SRB3 (Signaling Radio Bearer 3).

As one embodiment, the first RRC message comprises at least one RRCReconfiguration message.

As one embodiment, the first RRC message comprises at least one RRCResume message.

As one embodiment, the first RRC message comprises at least one RRCReestablishment message.

As one embodiment, the first RRC message being configured with at least one condition means that: the first RRC message comprises the at least one condition.

As one embodiment, the first RRC message being configured with at least one condition means that: the first RRC message indicates the at least one condition.

As one embodiment, the first RRC message being configured with at least one condition means that: the first RRC message comprises a first information block, and the first information block comprises the at least one condition.

As one embodiment, the first RRC message being configured with at least one condition means that: the first RRC message comprises the first information block, and the first information block indicates the at least one condition.

As one sub-embodiment of the above embodiment, the first information block is one RRCReconfiguration IE.

As one sub-embodiment of the above embodiment, the first information block comprises one MeasConfig IE.

As one sub-embodiment of the above embodiment, the first information block is one MeasConfig IE.

As one embodiment, the at least one condition is for radio resource management (RRM).

As one embodiment, the at least one condition is for mobility of a source serving cell.

As one embodiment, the at least one condition is for mobility of a source SpCell.

As one embodiment, the at least one condition is for addition/change of a candidate cell.

As one embodiment, the at least one condition is for addition/change of a conditional PSCell.

As one embodiment, the at least one condition is for addition/change of a secondary node (SN).

As one embodiment, the first RRC message comprises one first condition field, the first condition field is divided into different condition groups according to different condition types, the first condition field comprises the at least one condition, and any among the at least one condition is in the condition group of a corresponding type.

As one sub-embodiment of the above embodiment, the condition group is addable.

As one sub-embodiment of the above embodiment, the condition group is removable.

As one sub-embodiment of the above embodiment, a number of the condition groups is limited.

As one sub-embodiment of the above embodiment, the first condition field comprises a type list of the condition groups.

As one embodiment, a type of any among the at least one condition is the same.

As one embodiment, the type of any among the at least one condition is different.

As one embodiment, the type of any among the at least one condition is a CHO execution condition.

As one embodiment, the type of any among the at least one condition is an LTM execution condition.

As one embodiment, the type of any among the at least one condition is a reporting condition for RRM measurement.

As one embodiment, the type of any among the at least one condition is one of the CHO execution condition or the LTM execution condition.

As one embodiment, any among the at least one condition is orthogonal to another.

As one embodiment, any among the at least one condition is overlappable with another.

As one embodiment, any among the at least one condition is mutually exclusive with another.

As one embodiment, any among the at least one condition is mutually independent of another.

As one embodiment, any among the at least one condition is associated with another.

As one embodiment, a number of conditions comprised in the at least one condition is configurable.

As one embodiment, a maximum value of the number of conditions comprised in the at least one condition is configurable.

As one embodiment, the maximum value of the number of conditions comprised in the at least one condition is predefined.

As one embodiment, the maximum value of the number of conditions comprised in the at least one condition is default.

As one embodiment, the maximum value of the number of conditions comprised in the at least one condition is 16.

As one embodiment, the maximum value of the number of conditions comprised in the at least one condition is 8.

As one embodiment, the maximum value of the number of conditions comprised in the at least one condition is 4.

As one embodiment, the maximum value of the number of conditions comprised in the at least one condition is 2.

As one embodiment, the first RRC message comprises configuration information of the at least one cell; and the first cell is one of the at least one cell.

As one embodiment, the first cell is one candidate cell.

As one embodiment, the candidate cell means a candidate SpCell.

As one embodiment, the candidate cell means a CHO candidate SpCell.

As one embodiment, the candidate cell means an LTM candidate SpCell.

As one embodiment, the candidate cell means a candidate target SpCell.

As one embodiment, the first cell is one target cell.

As one embodiment, the target cell means a target SpCell.

As one embodiment, the SpCell is a PCell.

As one embodiment, the SpCell is a PSCell.

As one embodiment, the configuration information of the first cell comprises configuration information of a physical layer of the first cell.

As one embodiment, the configuration information of the first cell comprises a C (Cell)-RNTI (Radio Network Temporary Identifier) of the first node in the first cell.

As one embodiment, the configuration information of the first cell comprises common configuration information of the first cell.

As one embodiment, the configuration information of the first cell comprises at least part of fields in a ServingCellConfigCommon IE.

As one embodiment, the configuration information of the first cell comprises a downlink common configuration (DownlinkConfigCommon) of the first cell.

As one embodiment, the configuration information of the first cell comprises an uplink common configuration (UplinkConfigCommon) of the first cell.

As one embodiment, the configuration information of the first cell comprises periodicity of an SSB of the first cell.

As one embodiment, the configuration information of the first cell comprises a PBCH (Physical broadcast channel) configuration of the first cell.

As one embodiment, the SSB is an SS (Synchronization Signals)/PBCH.

As one embodiment, the SSB is a Synchronization Signals Block.

As one embodiment, the configuration information of the first cell comprises time domain positions of an SSB of the first cell.

As one embodiment, the configuration information of the first cell comprises global cell identity information of the first cell.

As one sub-embodiment of the above embodiment, the global cell identity information of the first cell comprises at least a global cell identity (GCI) of the first cell.

As one sub-embodiment of the above embodiment, the global cell identity information of the first cell comprises the global cell identity and a tracking area code (TAC) of the first cell.

As one sub-embodiment of the above embodiment, the global cell identity information of the first cell means the global cell identity and the tracking area code of the first cell.

As one embodiment, the configuration information of the first cell comprises physical cell identity information of the first cell.

As one sub-embodiment of the above embodiment, the physical cell identity information of the first cell comprises at least a physical cell identity (PCI) of the first cell.

As one sub-embodiment of the above embodiment, the physical cell identity information of the first cell comprises the physical cell identity and a carrier frequency of the first cell.

As one sub-embodiment of the above embodiment, the physical cell identity information of the first cell means the physical cell identity and the carrier frequency of the first cell.

As one embodiment, the first signaling is one piece of air interface signaling.

As one embodiment, the first signaling is transmitted through a PDSCH.

As one embodiment, the first signaling is transmitted through a PDCCH.

As one embodiment, the first signaling is one piece of signaling of a protocol layer below an RRC sublayer.

As one embodiment, the first signaling is one MAC PDU.

As one embodiment, the first signaling is one MAC subPDU.

As one embodiment, the first signaling comprises one MAC CE.

As one sub-embodiment of the above embodiment, the one MAC CE is identified by one MAC subheader.

As one sub-embodiment of the above embodiment, the first signaling comprises the one MAC subheader and the one MAC CE.

As one sub-embodiment of the above embodiment, the first signaling is the one MAC subheader and the one MAC CE.

As one sub-embodiment of the above embodiment, the first signaling is the one MAC CE.

As one sub-embodiment of the above embodiment, the one MAC subheader comprises one LCID field, and a value of the one LCID field indicates the one MAC CE.

As one sub-embodiment of the above embodiment, the one MAC subheader comprises one eLCID field, and a value of the one eLCID field indicates the one MAC CE.

As one sub-embodiment of the above embodiment, a plurality of fields in the one MAC CE indicate the first condition.

As one sub-embodiment of the above embodiment, one field in the one MAC CE indicates the first condition.

As one sub-embodiment of the above embodiment, a size of the one MAC CE is variable.

As one sub-embodiment of the above embodiment, the size of the one MAC CE is fixed.

As one sub-embodiment of the above embodiment, the one MAC CE occupies 1 byte.

As one sub-embodiment of the above embodiment, the one MAC CE occupies 2 bytes.

As one embodiment, the first signaling is one piece of DCI.

As one sub-embodiment of the above embodiment, the one piece of DCI is used for scheduling a PDSCH.

As one sub-embodiment of the above embodiment, the one piece of DCI is used for scheduling a PUSCH.

As one sub-embodiment of the above embodiment, a format of the one piece of DCI is DCI Format 1_0.

As one sub-embodiment of the above embodiment, the format of the one piece of DCI is DCI Format 0_0.

As one sub-embodiment of the above embodiment, a plurality of fields in the one piece of DCI indicate the first condition.

As one sub-embodiment of the above embodiment, one field in the one piece of DCI indicates the first condition.

As one embodiment, the first signaling is used for determining the first condition.

As one embodiment, the first signaling is used for updating the first condition.

As one embodiment, the first signaling is used for changing the first condition.

As one embodiment, the first signaling is used for selecting the first condition.

As one embodiment, the first signaling is used for determining to apply the first condition.

As one embodiment, the first signaling is used for modifying the first condition.

As one embodiment, the first signaling is used for activating the first condition.

As one embodiment, the phrase "the first signaling indicates a first condition" means that: the first signaling indicates a type of the first condition.

As one embodiment, the phrase "the first signaling indicates a first condition" means that: the first signaling indicates whether the first condition is one CHO execution condition or one LTM switch execution condition.

As one embodiment, the phrase "the first signaling indicates a first condition" means that: the first signaling indicates an index of the first condition.

As one embodiment, the phrase "the first signaling indicates a first condition" means that: the first signaling indicates at least one threshold required by the first condition.

As one embodiment, the phrase "the first signaling indicates a first condition" means that: the first signaling indicates an increment of at least one threshold required by the first condition.

As one embodiment, the phrase "the first signaling indicates a first condition" means that: the first signaling indicates an index of at least one threshold required by the first condition.

As one embodiment, the phrase "the first signaling indicates a first condition" means that: the first signaling indicates part of information of at least one threshold required by the first condition.

As one embodiment, the phrase "the first signaling indicates a first condition" means that: the first signaling indicates the index of the first condition and at least one threshold in the first condition.

As one embodiment, the first signaling indicates only one condition, and the only one condition is the first condition.

As one embodiment, the first signaling indicates a plurality of conditions, and the plurality of conditions are more than 1 condition; and the first condition is one among the plurality of conditions.

As one sub-embodiment of the above embodiment, the plurality of conditions are 2 conditions.

As one sub-embodiment of the above embodiment, the plurality of conditions are more than 2 conditions.

As one embodiment, the first condition comprises a measurement result for a serving cell being less than a first threshold; the first RRC message is used for determining that the first threshold is a first numerical value, and the first RRC message indicates the first numerical value; the first signaling is used for determining that the first threshold is a second numerical value, and the first signaling indicates the second numerical value; and the first condition is one Event A2.

As one embodiment, the first condition comprises the measurement result for the serving cell being less than a measurement result of the first cell; and the first condition is one Event A3.

As one embodiment, the first condition comprises a measurement result for the first cell being greater than a second threshold; the first RRC message is used for determining that the second threshold is a third numerical value, and the first RRC message indicates the third numerical value; the first signaling is used for determining that the second threshold is a fourth numerical value, and the first signaling indicates the fourth numerical value; and the first condition is one Event A4.

As one embodiment, the first condition comprises the measurement result for the serving cell being less than the first threshold and the measurement result for the serving cell being less than the measurement result of the first cell; the first RRC message is used for determining that the first threshold is the first numerical value, and the first RRC message indicates the first numerical value; the first signaling is used for determining that the first threshold is the second numerical value, and the first signaling indicates the second numerical value; and the first condition is one Event A5.

As one embodiment, the first condition comprises the measurement result for the serving cell being greater than a third threshold and the measurement result of the first cell being less than a fourth threshold; the third threshold and the fourth threshold are related to a distance; and the first condition is one Event D1.

As one embodiment, the phrase "any among the at least one condition is associated with the configuration information of the first cell" means that: any among the at least one condition is for the first cell.

As one embodiment, the phrase "any among the at least one condition is associated with the configuration information of the first cell" means that: in response to any among the at least one condition being satisfied, the configuration information of the first cell is applied.

As one embodiment, the phrase "any among the at least one condition is associated with the configuration information of the first cell" means that: any among the at least one condition is a candidate condition for applying the configuration information of the first cell.

As one embodiment, any among the at least one condition and the configuration information of the first cell belong to the same CondReconfigToAddMod.

As one embodiment, at the same moment, only one among the at least one condition is evaluated.

As one embodiment, at the same moment, part of conditions in the at least one condition are evaluated.

As one embodiment, at the same moment, all conditions in the at least one condition are evaluated.

As one embodiment, after receiving the first RRC message, the at least one condition is not started to be evaluated.

As one embodiment, after receiving the first RRC message, part of conditions in the at least one condition start to be evaluated.

As one embodiment, after receiving the first RRC message, all conditions in the at least one condition start to be evaluated.

As one sub-embodiment of the above embodiment, before receiving the first signaling, any among the at least one condition is not satisfied.

As one embodiment, after receiving the first RRC message, a designated condition starts to be evaluated, wherein the designated condition is different from the first condition.

As one sub-embodiment of the above embodiment, before receiving the first signaling, the designated condition is not satisfied.

As one sub-embodiment of the above embodiment, one field in the first RRC message indicates the designated condition.

As one sub-embodiment of the above embodiment, the designated condition is an initial condition in the at least one condition.

As one sub-embodiment of the above embodiment, the designated condition is a condition with a smallest index in the at least one condition.

As one sub-embodiment of the above embodiment, the at least one condition is sorted according to a priority, and the designated condition is a condition with a highest priority.

As one embodiment, any among the at least one condition being associated with the configuration information of the first cell comprises: any among the at least one condition is used for determining whether the configuration information of the first cell is applied.

As one sub-embodiment of the above embodiment, when any among the at least one condition is satisfied, it is determined that the configuration information of the first cell is applied.

As one sub-embodiment of the above embodiment, when all conditions in the at least one condition are not satisfied, it is determined that the configuration information of the first cell is not applied.

As one embodiment, any among the at least one condition being associated with the configuration information of the first cell comprises: any among the at least one condition is used for indicating whether the configuration information of the first cell is applied.

As one embodiment, the first node has a first UE capability, and the first UE capability supports AI/ML.

As one embodiment, the first node sends the first UE capability, and the first signaling depends on the first UE capability.

### Embodiment 2

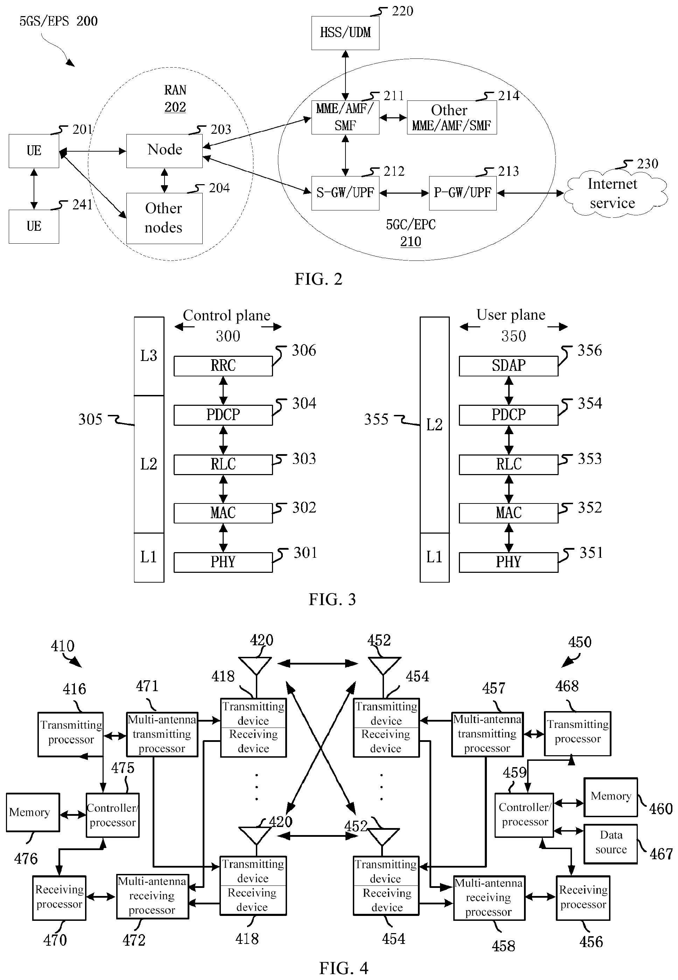

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to the other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation device (BS).

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the user equipment supports transmission in a non-terrestrial network (NTN).

As one embodiment, the user equipment supports transmission in a terrestrial network.

As one embodiment, the user equipment supports dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports low-delay and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT.

As one embodiment, the user equipment supports generating reports using AI (Artificial Intelligence) or Machine Learning.

As one embodiment, the user equipment supports dynamically configuring a plurality of triggering events using AI (Artificial Intelligence) or Machine Learning.

As one embodiment, the user equipment supports dynamic handover using AI (Artificial Intelligence) or Machine Learning.

As one embodiment, the user equipment supports generating a trained model using training data or generating partial parameters in a trained model using trained data.

As one embodiment, the user equipment supports applying a first RRC message through training.

As one embodiment, the user equipment supports determining one among at least one condition through training.

As one embodiment, the user equipment is a terminal supporting Massive-MIMO.

As one embodiment, the base station device supports transmission in a non-terrestrial network.

As one embodiment, the base station device supports transmission in a terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a Macro Cellular base station.

As one embodiment, the base station device comprises a Micro Cell base station.

As one embodiment, the base station device comprises a Pico Cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the base station device supports Massive-MIMO-based transmission.

As one embodiment, the base station device supports decompressing CSI using AI or deep learning.

As one embodiment, the base station device supports mobility management using AI or deep learning.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. A Layer 2 (L2 layer) 305 is above the PHY301, and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer packets, retransmission of lost data packets, and reordering of data packets to compensate for unordered reception caused by an HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers by using RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, a first RRC message in the present application is generated in an RRC306.

As one embodiment, first signaling in the present application is generated in a MAC302 or a MAC352.

As one embodiment, the first signaling in the present application is generated in the PHY301 or a PHY351.

As one embodiment, a first condition in the present application is generated in the RRC306.

As one embodiment, a second condition in the present application is generated in the RRC306.

As one embodiment, a third condition in the present application is generated in the RRC306.

As one embodiment, a fourth condition in the present application is generated in the RRC306.

As one embodiment, second signaling in the present application is generated in the MAC302 or the MAC352.

As one embodiment, the second signaling in the present application is generated in the PHY301 or the PHY351.

As one embodiment, a first target threshold in the present application is generated in the RRC306.

As one embodiment, the first target threshold in the present application is generated in the MAC302 or the MAC352.

As one embodiment, the first target threshold in the present application is generated in the PHY301 or the PHY351.

As one embodiment, a first UE variable in the present application is generated in the RRC306.

As one embodiment, a first handover command in the present application is generated in the RRC306.

As one embodiment, the first handover command in the present application is generated in the MAC302 or the MAC352.

As one embodiment, the first handover command in the present application is generated in the PHY301 or the PHY351.

### Embodiment 4

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, an upper-layer data packet from a core network is provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for the retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal constellations based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and a soft decision is generated. The receiving processor 456 then decodes and deinterleaves the soft decision to recover upper-layer data and control signals transmitted by the second communication device 410 on the physical channel. The upper-layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to a sending function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements the function of the L2 layer for the user plane and the control plane. The controller/processor 459 is also responsible for retransmission of lost packets and signaling to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 can be provided to the core network.

As one embodiment, the first communication device 450 comprises: at least one processor and at least one memory, wherein the at least one memory comprises computer program codes; the at least one memory and the computer program codes are configured to be used together with the at least one processor, and the first communication device 450 at least: receives a first RRC message, wherein the first RRC message is configured with at least one condition, and the first RRC message comprises configuration information of a first cell; receives first signaling, wherein the first signaling indicates a first condition, and the first signaling is radio signaling of a protocol layer under an RRC sublayer; and applies the configuration information of the first cell, wherein the first condition is one among the at least one condition; the behavior of applying the configuration information of the first cell depends on the first condition being satisfied; and any among the at least one condition is associated with the configuration information of the first cell.

As one embodiment, the first communication device 450 comprises: a memory storing a computer-readable instruction program, wherein the computer-readable instruction program generates an action when executed by at least one processor, and the action comprises: a first processor, receiving the first RRC message, wherein the first RRC message is configured with at least one condition, and the first RRC message comprises the configuration information of the first cell; receiving the first signaling, wherein the first signaling indicates the first condition, and the first signaling is the radio signaling of the protocol layer under the RRC sublayer; and applying the configuration information of the first cell, wherein the first condition is one among the at least one condition; the behavior of applying the configuration information of the first cell depends on the first condition being satisfied; and any among the at least one condition is associated with the configuration information of the first cell.

As one embodiment, the first communication device 410 corresponds to a second node in the present application; the second communication device 410 comprises: at least one processor and at least one memory, wherein the at least one memory comprises computer program codes; and the at least one memory and the computer program codes are configured to be used together with the at least one processor. The second communication device 410 at least: sends the first RRC message, wherein the first RRC message is configured with at least one condition, and the first RRC message comprises the configuration information of the first cell; and sends the first signaling, wherein the first signaling indicates the first condition, and the first signaling is the radio signaling of the protocol layer under the RRC sublayer, wherein a recipient of the first signaling applies the configuration information of the first cell; the first condition is one among the at least one condition; the recipient of the first signaling applying the configuration information of the first cell depends on the first condition being satisfied; and any among the at least one condition is associated with the configuration information of the first cell.

As one embodiment, the first communication device 410 corresponds to the second node in the present application; the second communication device 410 comprises: a memory storing a computer-readable instruction program, wherein the computer-readable instruction program generates an action when executed by at least one processor, and the action comprises: a second transmitter, sending the first RRC message, wherein the first RRC message is configured with at least one condition, and the first RRC message comprises the configuration information of the first cell; and sending the first signaling, wherein the first signaling indicates the first condition, and the first signaling is the radio signaling of the protocol layer under the RRC sublayer, wherein the recipient of the first signaling applies the configuration information of the first cell; the first condition is one among the at least one condition; the recipient of the first signaling applying the configuration information of the first cell depends on the first condition being satisfied; and any among the at least one condition is associated with the configuration information of the first cell.

As one embodiment, at least one of the antenna 452, the receiving device 454, the receiving processor 456, and the controller/processor 459 is used for receiving the first RRC message.

As one embodiment, at least one of the antenna 420, the transmitting device 418, the transmitting processor 416, and the controller/processor 475 is used for sending the first RRC message.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for receiving the first signaling.

As one embodiment, at least one of the antenna 452, the receiving device 454, the receiving processor 456, and the controller/processor 459 is used for receiving second signaling.

As one embodiment, at least one of the antenna 420, the transmitting device 418, the transmitting processor 416, and the controller/processor 475 is used for sending the second signaling.

As one embodiment, at least one of the antenna 452, the receiving device 454, the receiving processor 456, and the controller/processor 459 is used for receiving a first handover command.

As one embodiment, at least one of the antenna 420, the transmitting device 418, the transmitting processor 416, and the controller/processor 475 is used for sending the first handover command.

As one embodiment, the first communication device 450 corresponds to a first node in the present application.

As one embodiment, the first communication device 410 corresponds to the second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

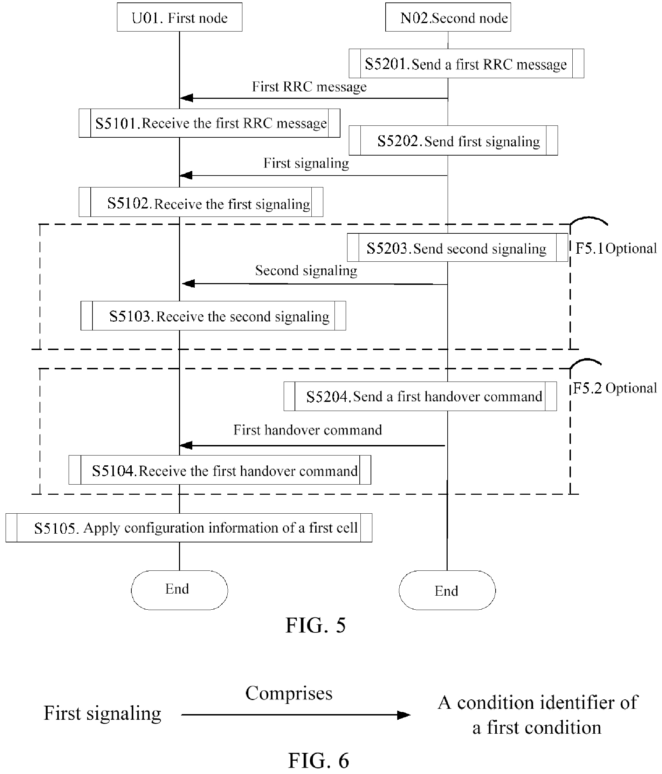

Embodiment 5 illustrates a flowchart of wireless signal transmission according to one embodiment of the present application, as shown in FIG. 5. It is particularly noted that the order in this example does not limit the signal transmission order and implementation order in the present application.

For **a first node U01**, in step S5101, a first RRC message is received, wherein the first RRC message is configured with at least one condition, and the first RRC message comprises configuration information of a first cell; in step S5102, first signaling is received, wherein the first signaling indicates a first condition, and the first signaling is radio signaling of a protocol layer under an RRC sublayer; in step S5103, second signaling is received, wherein the second signaling indicates a third condition, and the third condition is one among the at least one condition; in step S5104, a first handover command is received; and in step S5105, the configuration information of the first cell is applied.

For **a second node N02**, in step S5201, the first RRC message is sent; in step S5202, the first signaling is sent; in step S5203, the second signaling is sent; and in step S5204, the first handover command is sent.

In Embodiment 5, the first condition is one among the at least one condition; the behavior of applying the configuration information of the first cell depends on the first condition being satisfied; and any among the at least one condition is associated with the configuration information of the first cell.

As one embodiment, the second node N02 is a maintaining base station of one serving cell of the first node U01.

As one embodiment, the second node N02 is a maintenance base station of the first cell.

As one embodiment, the first node U01 and the second node N02 are connected in a wireless mode.

As one embodiment, the first node U01 and the second node N02 are connected in a wired mode.

As one embodiment, the first node U01 and the second node N02 are connected through a Uu interface.

As one embodiment, the first node U01 and the second node N02 are connected through an IAB interface.

As one embodiment, the first node U01 and the second node N02 are connected through a PC5 interface.

As one embodiment, the first node U01 receives the first RRC message.

As one sub-embodiment of the above embodiment, the first node U01 monitors the first signaling after receiving the first RRC message.

As one sub-embodiment of the above embodiment, the first node U01 monitors the first signaling within a time interval after receiving the first RRC message.

As one dependent embodiment of the above sub-embodiment, the time interval is predefined.

As one dependent embodiment of the above sub-embodiment, the first RRC message comprises a configuration of the time interval.

As one dependent embodiment of the above sub-embodiment, the time interval is optional.

As one dependent embodiment of the above sub-embodiment, the time interval is obtained through calculation.

As one dependent embodiment of the above sub-embodiment, the time interval is obtained through inference.

As one dependent embodiment of the above sub-embodiment, the time interval is obtained through AI training.

As one dependent embodiment of the above sub-embodiment, the time interval is decided by the first node.

As one sub-embodiment of the above embodiment, the first node U01 monitors the first signaling on a designated time-frequency resource after receiving the first RRC message.

As one sub-embodiment of the above embodiment, the first node U01 starts a first timer after receiving the first RRC message, and monitors the first signaling before the first timer expires.

As one dependent embodiment of the above sub-embodiment, the first timer is T321.

As one dependent embodiment of the above sub-embodiment, the first timer is one timer other than the T321.

As one sub-embodiment of the above embodiment, after the first RRC message is received, a condition in the at least one condition is configured.

As one sub-embodiment of the above embodiment, after the first RRC message is received, the condition in the at least one condition is applied.

As one dependent embodiment of the above sub-embodiment, the application means: using the condition in the at least one condition to trigger measurement.

As one dependent embodiment of the above sub-embodiment, the application means: using the condition in the at least one condition to trigger reporting.

As one dependent embodiment of the above sub-embodiment, the application means: using the condition in the at least one condition to trigger handover.

As one dependent embodiment of the above sub-embodiment, the application means: using the condition in the at least one condition for evaluation.

As one sub-embodiment of the above embodiment, after the first RRC message is received, the condition in the at least one condition is stored.

As one embodiment, the first node U01 receives the first signaling.

As one sub-embodiment of the above embodiment, a sender of the first RRC message is different from a sender of the first signaling.

As one sub-embodiment of the above embodiment, the sender of the first RRC message is the same as the sender of the first signaling.

As one sub-embodiment of the above embodiment, the radio signaling of the protocol layer under the RRC sublayer is signaling transmitted through an air interface.

As one sub-embodiment of the above embodiment, the radio signaling of the protocol layer under the RRC sublayer is signaling transmitted through wireless transmission.

As one sub-embodiment of the above embodiment, after the first signaling is received, the first condition starts to be evaluated.

As one sub-embodiment of the above embodiment, after the first signaling is received, the first condition starting to be evaluated is indicated.

As one sub-embodiment of the above embodiment, after the first signaling is received, the first condition starting to be evaluated is triggered.

As one sub-embodiment of the above embodiment, after the first signaling is received, evaluation of other conditions in the at least one condition other than the first condition is stopped.

As one sub-embodiment of the above embodiment, after the first signaling is received, in response to the first signaling being received, the first condition starts to be evaluated.

As one dependent embodiment of the above sub-embodiment, after the first condition starts to be evaluated, evaluation of other conditions in the at least one condition other than the first condition is stopped.

As one dependent embodiment of the above sub-embodiment, after the first condition starts to be evaluated, evaluation of other conditions in the at least one condition other than the first condition continues.

As one sub-embodiment of the above embodiment, after a period of time after the first signaling is received, the first condition starts to be evaluated.

As one sub-embodiment of the above embodiment, in response to the first signaling being received, a MAC sublayer of the first node sends a first indication to an RRC sublayer of the first node.

As one sub-embodiment of the above embodiment, as the first signaling comprises the first indication, the MAC sublayer of the first node transmits the first indication to the RRC sublayer of the first node.

As one sub-embodiment of the above embodiment, in response to the RRC sublayer of the first node receiving the first indication, the first condition is applied.

As one sub-embodiment of the above embodiment, in response to the RRC sublayer of the first node receiving the first indication, the first condition starts to be evaluated.

As one sub-embodiment of the above embodiment, in response to the RRC sublayer of the first node receiving the first indication, a lower layer is indicated to evaluate the first condition.

As one sub-embodiment of the above embodiment, in response to the RRC sublayer of the first node receiving the first indication, the first condition is used as a triggered condition.

As one sub-embodiment of the above embodiment, after the first signaling is received, the configuration information of the first cell is applied.

As one sub-embodiment of the above embodiment, in response to the first condition being satisfied, the configuration information of the first cell is applied.

As one sub-embodiment of the above embodiment, the first condition being satisfied triggers the behavior of applying the configuration information of the first cell.

As one sub-embodiment of the above embodiment, after receiving the first signaling, the first condition starts to be evaluated, and when the first condition is satisfied, the configuration information of the first cell is applied.

As one embodiment, a dotted block F5.1 is optional.

As one embodiment, the dotted block F5.1 exists.

As one embodiment, the first node U01 receives the second signaling.

As one sub-embodiment of the above embodiment, receiving the second signaling is after receiving the first signaling.

As one sub-embodiment of the above embodiment, receiving the second signaling is before receiving the first signaling.

As one sub-embodiment of the above embodiment, receiving the second signaling and receiving the first signaling occur simultaneously.

As one sub-embodiment of the above embodiment, a sender of the second signaling is different from the sender of the first signaling.

As one sub-embodiment of the above embodiment, the sender of the second signaling is the same as the sender of the first signaling.

As one sub-embodiment of the above embodiment, the second signaling and the first signaling have the same format.

As one sub-embodiment of the above embodiment, the second signaling and the first signaling have different formats.

As one sub-embodiment of the above embodiment, the second signaling is one piece of air interface signaling.

As one sub-embodiment of the above embodiment, the second signaling is transmitted through a PDSCH.

As one sub-embodiment of the above embodiment, the second signaling is transmitted through a PDCCH.

As one sub-embodiment of the above embodiment, the second signaling is one piece of signaling of a protocol layer under an RRC sublayer.

As one sub-embodiment of the above embodiment, the second signaling is one MAC subPDU.

As one sub-embodiment of the above embodiment, the second signaling comprises one MAC subheader and one MAC CE.

As one sub-embodiment of the above embodiment, the second signaling is one MAC subheader and one MAC CE.

As one sub-embodiment of the above embodiment, the second signaling is one MAC CE.

As one sub-embodiment of the above embodiment, the second signaling is one piece of DCI.

As one sub-embodiment of the above embodiment, the second signaling is used for updating the first condition.

As one sub-embodiment of the above embodiment, the second signaling is used for changing the first condition.

As one sub-embodiment of the above embodiment, the second signaling is used for modifying the first condition.

As one sub-embodiment of the above embodiment, the second signaling indicates the third condition, and the third condition is one among the at least one condition.

As one sub-embodiment of the above embodiment, the second signaling is used for determining the third condition.

As one sub-embodiment of the above embodiment, the second signaling is used for updating the third condition.

As one sub-embodiment of the above embodiment, the second signaling is used for changing the third condition.

As one sub-embodiment of the above embodiment, the second signaling is used for selecting the third condition.

As one sub-embodiment of the above embodiment, the second signaling is used for determining to apply the third condition.

As one sub-embodiment of the above embodiment, the second signaling is used for modifying the third condition.

As one sub-embodiment of the above embodiment, the second signaling is used for activating the third condition.

As one sub-embodiment of the above embodiment, the second signaling indicates a type of the third condition.

As one sub-embodiment of the above embodiment, in response to the second signaling being received, the first condition is removed from the at least one condition.

As one embodiment, the dotted block F5.1 does not exist.

As one embodiment, a dotted block F5.2 is optional.

As one embodiment, the dotted block F5.2 exists.

As one embodiment, the first node U01 receives the first handover command.

As one sub-embodiment of the above embodiment, a sender of the first handover command is different from the sender of the first signaling.

As one sub-embodiment of the above embodiment, the first handover command is one RRC message.

As one sub-embodiment of the above embodiment, the first handover command is one RRC message comprising a reconfigurationWithSync field.

As one sub-embodiment of the above embodiment, the first handover command is one LTM switch command.

As one sub-embodiment of the above embodiment, the first handover command is one MAC CE.

As one sub-embodiment of the above embodiment, the first handover command is one command of a protocol layer under a MAC sublayer.

As one sub-embodiment of the above embodiment, the first handover command is triggered.

As one sub-embodiment of the above embodiment, the first handover command is decided by a base station.

As one sub-embodiment of the above embodiment, the first handover command is inferred.

As one sub-embodiment of the above embodiment, after the first handover command is received, the first node is triggered to apply a configuration of the first cell.

As one sub-embodiment of the above embodiment, in response to the first handover command being received, the first node applies the configuration of the first cell.

As one embodiment, the dotted block F5.2 does not exist.

### Embodiment 6

Embodiment 6 illustrates a schematic diagram of first signaling comprising a condition identifier of a first condition according to one embodiment of the present application, as shown in FIG. 6.

In Embodiment 6, a first RRC message configures one condition identifier for each condition in the at least one condition, and the first signaling comprises the condition identifier of the first condition.

As one embodiment, condition identifiers configured by the first RRC message for any two conditions in the at least one condition are different.

As one embodiment, a condition identifier configured by the first RRC message for any among the at least one condition is one positive integer.

As one embodiment, the condition identifier configured by the first RRC message for any among the at least one condition is one non-negative integer.

As one embodiment, the condition identifier configured by the first RRC message for any among the at least one condition is an integer not less than 0 and not greater than Q1-1; and the Q1 is a maximum value of a number of conditions in the at least one condition.

As one sub-embodiment of the above embodiment, the Q1 is configured by RRC.

As one sub-embodiment of the above embodiment, the Q1 is predefined.

As one sub-embodiment of the above embodiment, the Q1 is default.

As one sub-embodiment of the above embodiment, the Q1 is modifiable.

As one sub-embodiment of the above embodiment, the Q1 is selectable.

As one sub-embodiment of the above embodiment, the Q1 is configured based on different UE capabilities.

As one embodiment, the condition identifier configured by the first RRC message for any among the at least one condition is random.

As one embodiment, the condition identifier configured by the first RRC message for any among the at least one condition is specific to the any condition.

As one embodiment, the first signaling comprising the condition identifier of the first condition is used for indicating the first condition.

As one embodiment, the first signaling comprising the condition identifier of the first condition is associated with the first condition.

As one embodiment, one field of the first signaling comprises the condition identifier of the first condition.

As one embodiment, the first signaling only comprises the condition identifier of the first condition.

As one embodiment, the first signaling comprises condition identifiers of a plurality of conditions comprising the condition identifier of the first condition.

As one embodiment, the first signaling comprises all condition identifiers of any among the at least one condition.

As one embodiment, the first signaling comprises part of condition identifiers of any among the at least one condition.

As one embodiment, the first signaling comprises at least one condition identifier of any among the at least one condition.

### Embodiment 7

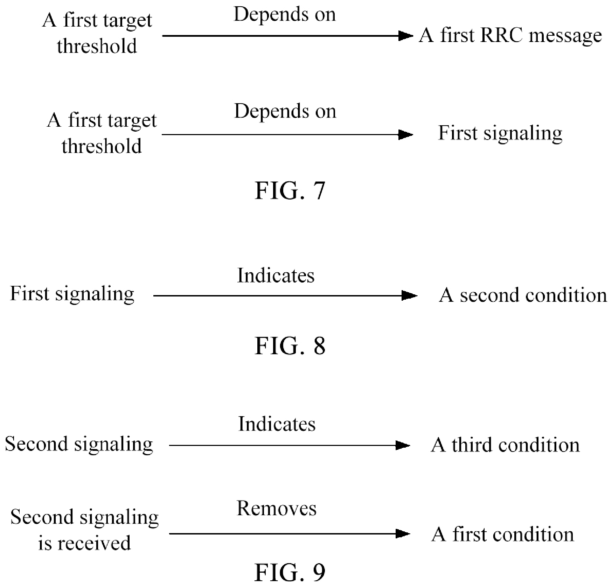

Embodiment 7 illustrates a schematic diagram of a first target threshold depending on a first RRC message and first signaling according to one embodiment of the present application, as shown in FIG. 7.

In Embodiment 7, a first condition comprises a measurement result for a first cell being greater than the first target threshold; the first RRC message is used for determining that the first target threshold is a first value, and the first RRC message comprises the first value; and the first signaling is used for determining that the first target threshold is a second value, and the first signaling indicates the second value.

As one embodiment, the first condition only comprises a condition that the measurement result for the first cell is greater than the first target threshold.

As one embodiment, the measurement result is RSRP (Reference Signal Received Power).

As one embodiment, the measurement result is RSRQ (Reference Signal Received Quality).

As one embodiment, the measurement result is an RSSI (Received Signal Strength Indicator).

As one embodiment, the measurement result is an SINR (Signal to Interference plus Noise Ratio).

As one embodiment, the measurement result is a distance.

As one embodiment, the greater than means not less than.

As one embodiment, the first target threshold is preconfigured.

As one embodiment, the first target threshold is updatable.

As one embodiment, the first target threshold is obtained through calculation.

As one embodiment, the first target threshold is the first value.

As one embodiment, the first target threshold is the second value.

As one embodiment, the first target threshold is preconfigured as the first value and is updated as the second value after receiving the first signaling.

As one embodiment, the first value is obtained through AI inference.

As one embodiment, the first value is obtained through AI calculation.

As one embodiment, the first value is obtained through AI training.

As one embodiment, the first signaling comprises the second value.

As one embodiment, the second value is unrelated to the first value.

As one embodiment, the first signaling indicates a difference between the second value and the first value.

As one embodiment, the first signaling comprises information for obtaining the second value.

As one embodiment, the first signaling comprises a first offset, and the second value depends on the first value and the first offset.

As one embodiment, the first condition comprises: Mn + Ofn + Ocn - Hys > Thresh2, wherein Mn + Ofn + Ocn - Hys is the measurement result for the first cell; and the Thresh2 is the first target threshold.

As one embodiment, the first condition comprises the measurement result for the first cell being greater than the first target threshold and a measurement result for a serving cell being less than a second target threshold; the first RRC message is used for determining that the first target threshold is the first value and the second target threshold is a third value, the first RRC message indicates the first value, and the first RRC message indicates the third value; and the first signaling is used for determining that the first target threshold is the second value and the second target threshold is a fourth value, the first signaling indicates the second value, and the first signaling indicates the fourth value.

As one sub-embodiment of the above embodiment, the first condition comprises: Mn + Ofn + Ocn - Hys > Thresh2 and Mp + Hys < Thresh1, wherein Mn + Ofn + Ocn - Hys is the measurement result for the first cell, and Mp + Hys is the measurement result for the serving cell; and the Thresh2 is the first target threshold, and the Thresh1 is the second target threshold.

As one sub-embodiment of the above embodiment, the first condition comprises the measurement result for the serving cell being less than the second target threshold.

As one dependent embodiment of the above sub-embodiment, the first condition comprises: Ms + Hys < Thresh1, wherein Ms + Hys is the measurement result for the serving cell; and the Thresh1 is the second target threshold.

As one embodiment, the first condition comprises the measurement result for the first cell being less than a third target threshold and the measurement result for the serving cell being greater than a fourth target threshold; the first RRC message is used for determining that the third target threshold is a fifth value and the fourth target threshold is a seventh value, the first RRC message indicates the fifth value, and the first RRC message indicates the seventh value; and the first signaling is used for determining that the third target threshold is a sixth value and the fourth target threshold is an eighth value, the first signaling indicates the sixth value, and the first signaling indicates the eighth value.

As one sub-embodiment of the above embodiment, the first condition comprises: Ml1 + Hys < Thresh3 and Ml2 - Hys > Thresh4, wherein Mn + Ofn + Ocn - Hys is the measurement result for the first cell, and Mp + Hys is the measurement result for the serving cell; and the Thresh3 is the third target threshold, and the Thresh4 is the fourth target threshold.

### Embodiment 8

Embodiment 8 illustrates a schematic diagram of first signaling indicating a second condition according to one embodiment of the present application, as shown in FIG. 8.

In Embodiment 8, the first signaling indicates the second condition, and the second condition is one among another at least one condition; a first RRC message is configured with the another at least one condition, and the first RRC message comprises configuration information of a second cell; and any among the another at least one condition is associated with the configuration information of the second cell.

As one embodiment, the second condition and a first condition are of the same type.

As one embodiment, the second condition and the first condition are of different types.

As one embodiment, the first signaling comprises one bitmap, and each bit in the one bitmap corresponds to one candidate cell; and bits corresponding to a first cell and the second cell in the one bitmap are set to 1.

As one embodiment, the one bitmap occupies 8 bits.

As one embodiment, the one bitmap occupies at most 8 bits.

As one embodiment, at least one bit in the one bitmap is reserved.

As one embodiment, any bit in the one bitmap is not reserved.

As one embodiment, any bit in the one bitmap can be reserved.

As one embodiment, any bit in the one bitmap can be modified.

As one embodiment, a number of bits occupied by the one bitmap depends on a number of configured candidate cells.

As one embodiment, the number of bits occupied by the one bitmap is equal to the number of configured candidate cells.

As one embodiment, the number of bits occupied by the one bitmap depends on a number of candidate cells whose conditions can be indicated by signaling of a protocol layer under an RRC sublayer.

As one embodiment, the number of bits occupied by the one bitmap is equal to the number of candidate cells whose conditions can be indicated by the signaling of the protocol layer under the RRC sublayer.

As one embodiment, any bit in the one bitmap cannot be reserved.

As one embodiment, any bit in the one bitmap is associated with any cell index.

As one embodiment, the first signaling indicates a plurality of conditions, and the plurality of conditions are not less than 2 conditions.

As one sub-embodiment of the above embodiment, any among the plurality of conditions corresponds to one candidate cell in a plurality of candidate cells, and the first cell and the second cell are one candidate cell in the plurality of candidate cells respectively.

As one embodiment, the first signaling indicates the plurality of conditions and the plurality of candidate cells.

As one embodiment, bits corresponding to the plurality of candidate cells in the one bitmap are set to 1.

As one embodiment, the plurality of candidate cells are candidate cells corresponding to bits set to 1 in the one bitmap.

As one embodiment, the first signaling comprises a condition identifier of the first condition and a condition identifier of the second condition.

As one embodiment, the first signaling comprises a cell index of the first cell and a cell index of the second cell.

As one sub-embodiment of the above embodiment, the cell index is one logical identifier.

As one sub-embodiment of the above embodiment, the cell index is one physical identifier.

As one sub-embodiment of the above embodiment, the cell index is one PCI.

As one sub-embodiment of the above embodiment, the cell index is one candidate configuration identifier.

As one sub-embodiment of the above embodiment, the cell index is configured by an RRC message.

As one sub-embodiment of the above embodiment, the cell index is configured by one field in an RRC message.

As one sub-embodiment of the above embodiment, the cell index is configured by one field in the first RRC message.

As one embodiment, the another at least one condition and the at least one condition do not overlap.

As one embodiment, the another at least one condition is part of conditions other than the first condition in the at least one condition.

As one embodiment, any among the another at least one condition being associated with configuration information of the first cell comprises: any among the at least one condition is used for determining whether the configuration information of the second cell is applied.

As one sub-embodiment of the above embodiment, when any among the another at least one condition is satisfied, it is determined that the configuration information of the second cell is applied.

As one sub-embodiment of the above embodiment, when all conditions in the another at least one condition are not satisfied, it is determined that the configuration information of the second cell is not applied.

As one embodiment, any among the another at least one condition being associated with the configuration information of the second cell comprises: any among the another at least one condition is used for indicating whether the configuration information of the second cell is applied.

As one embodiment, the first cell and the second cell are one candidate cell respectively.

As one embodiment, the first cell and the second cell belong to different cell groups (CGs) respectively.

As one embodiment, the first cell and the second cell belong to different TAGs respectively.

As one embodiment, TAs of the first cell and the second cell are different.

### Embodiment 9

Embodiment 9 illustrates a schematic diagram of second signaling indicating a third condition and removing a first condition according to one embodiment of the present application, as shown in FIG. 9.

In Embodiment 9, a recipient of first signaling receives the second signaling, wherein the second signaling indicates the third condition, and the third condition is one among the at least one condition; and in response to the second signaling being received, the first condition is removed from the at least one condition.

As one embodiment, the second signaling and the first signaling belong to different MAC subPDUs.

As one embodiment, the second signaling and the first signaling belong to the same MAC subPDU.

As one embodiment, the second signaling and the first signaling are one MAC CE respectively.

As one sub-embodiment of the above embodiment, the second signaling and the first signaling are identified by the same LCID.

As one dependent embodiment of the above sub-embodiment, a first field in the second signaling being set to a sixth numerical value is used for determining to remove the first condition from the at least one condition, and the first field in the first signaling being set to a fifth numerical value is used for determining to update or change or select or activate or add or modify the first condition in the at least one condition.

As one dependent embodiment of the above sub-embodiment, a second field in the second signaling being set to the sixth numerical value is used for determining to remove the first condition from the at least one condition, and the first field in the first signaling being set to the fifth numerical value is used for determining to update or change or select or activate or add or modify the first condition in the at least one condition.

As one sub-embodiment of the above embodiment, the second signaling and the first signaling are identified by different LCIDs.

As one embodiment, the second signaling and third signaling comprise a target field, and a value of the target field in the second signaling is different from a value of the target field in the third signaling; and the second signaling and the first signaling are identified by the same LCID.

As one sub-embodiment of the above embodiment, the target field occupies 2 bits.

As one sub-embodiment of the above embodiment, the target field occupies 1 bit.

As one sub-embodiment of the above embodiment, the value of the target field in the second signaling is 1, and the value of the target field in the third signaling is 0.

As one sub-embodiment of the above embodiment, the value of the target field in the second signaling is 0, and the value of the target field in the third signaling is 1.

As one embodiment, the second signaling and the first signaling are one piece of DCI respectively.

As one embodiment, the second signaling is one piece of DCI; and the first signaling is one MAC CE.

As one embodiment, the second signaling only indicates the third condition.

As one embodiment, the second signaling indicates a plurality of conditions comprising the third condition.

As one embodiment, the second signaling indicates the plurality of conditions comprising the third condition, and the plurality of conditions belong to the at least one condition.

As one embodiment, the third condition is related to the first condition.

As one embodiment, the third condition is unrelated to the first condition.

As one embodiment, the phrase "second signaling indicating a third condition" means that: the second signaling indicates a type of the third condition.

As one sub-embodiment of the above embodiment, the second signaling indicates whether the third condition is one CHO execution condition or one LTM switch execution condition.

As one embodiment, the phrase "second signaling indicating a third condition" means that: the second signaling indicates an index of the third condition.

As one embodiment, the phrase "second signaling indicating a third condition" means that: the second signaling indicates at least one threshold of the third condition.

As one embodiment, the phrase "second signaling indicating a third condition" means that: the second signaling indicates the index of the third condition and at least one threshold in the third condition.

As one embodiment, the second signaling being received triggers removing the first condition.

As one embodiment, in response to the second signaling being received, removing the first condition is triggered.

As one embodiment, in response to the second signaling being received, a MAC sublayer of a first node transmits a second indication to an RRC sublayer of the first node.

As one sub-embodiment of the above embodiment, in response to the RRC sublayer of the first node receiving the second indication, the first condition is removed.

As one sub-embodiment of the above embodiment, in response to the RRC sublayer of the first node receiving the second indication, the third condition is applied and the first condition is removed.

### Embodiment 10

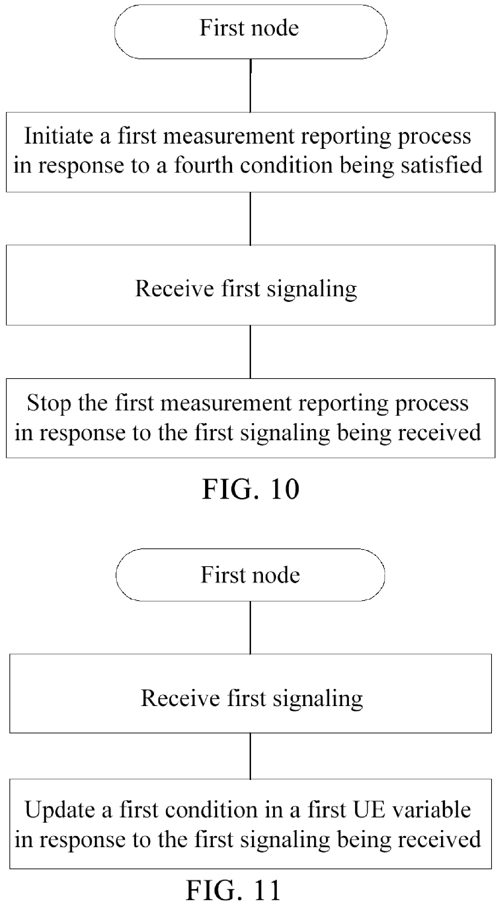

Embodiment 10 illustrates a flowchart of stopping a first measurement reporting process according to one embodiment of the present application, as shown in FIG. 10.

In Embodiment 10, in response to a fourth condition being satisfied, a recipient of first signaling initiates the first measurement reporting process; and stops the first measurement reporting process in response to the first signaling being received, wherein the fourth condition is applied before the first signaling is received; and the fourth condition is one among the at least one condition.

As one embodiment, when the first signaling is received, the first measurement reporting process is ongoing.

As one embodiment, the first measurement reporting process is one Measurement reporting process.

As one embodiment, the first measurement reporting process is one Measurement logging process.

As one embodiment, the first signaling comprises the fourth condition, and in response to the first signaling being received, the first measurement reporting process is stopped.

As one embodiment, the first signaling indicates the fourth condition, and in response to the first signaling being received, the first measurement reporting process is stopped.

As one embodiment, the first signaling indicates activating the fourth condition, and in response to the first signaling being received, the first measurement reporting process is stopped.

As one embodiment, the first signaling indicates removing the fourth condition, and in response to the first signaling being received, the first measurement reporting process is stopped.

As one embodiment, the first signaling indicates applying the fourth condition, and in response to the first signaling being received, the first measurement reporting process is stopped.

As one embodiment, a condition indicated by the first signaling does not comprise the fourth condition, and in response to the first signaling being received, the first measurement reporting process is stopped.

As one embodiment, if a timer T312 for the first measurement process is running, the timer T312 is stopped.

As one embodiment, if a measurement result associated with the fourth condition is stored in VarMeasReportList, the measurement result associated with the fourth condition is removed from the VarMeasReportList.

As one embodiment, if other measurement results comprising the measurement result associated with the fourth condition are stored in VarMeasReportList, all the other measurement results are removed from the VarMeasReportList.

As one embodiment, in response to the first signaling being received, the first measurement reporting process is stopped, a second measurement reporting process is started, and the second measurement reporting process is not the first measurement reporting process.

As one embodiment, in response to the first signaling being received, VarMeasReportList re-stores the measurement result associated with the fourth condition.

As one embodiment, in response to the first signaling being received, VarMeasReportList re-stores the measurement result associated with the condition indicated by the first signaling.

As one embodiment, the fourth condition is indicated by fourth signaling, and the fourth signaling is received before the first signaling is received.

As one embodiment, the fourth condition is related to a first condition.

As one embodiment, the fourth condition is unrelated to the first condition.

As one embodiment, the fourth condition is triggered by UE itself.

### Embodiment 11

Embodiment 11 illustrates a flowchart of updating a first UE variable according to one embodiment of the present application, as shown in FIG. 11.

In Embodiment 11, in response to first signaling being received, a recipient of the first signaling updates a first condition in the first UE variable, wherein the first UE variable comprises at least the former of the first condition and configuration information of a first cell.

As one embodiment, in response to an RRC sublayer of a first node receiving a first indication, the first condition is updated in the first UE variable.

As one sub-embodiment of the above embodiment, the phrase "updates a first condition" means: adding the first condition.

As one sub-embodiment of the above embodiment, the phrase "updates a first condition" means: modifying the first condition.

As one sub-embodiment of the above embodiment, the phrase "updates a first condition" means: modifying a mathematical relationship in the first condition.

As one sub-embodiment of the above embodiment, the phrase "updates a first condition" means: modifying a threshold in the first condition.

As one embodiment, a name of the first UE variable comprises Var.

As one embodiment, the name of the first UE variable comprises VarMeasConfig.

As one embodiment, the first UE variable comprises one VarMeasConfig.

As one embodiment, the first UE variable is one VarMeasConfig.

As one embodiment, the first UE variable is one VarMeasConfig-r19.

As one embodiment, the first UE variable is one VarMeasConfig-r20.

As one embodiment, the first UE variable comprises one VarLogMeasReport.

As one embodiment, the first UE variable is one VarLogMeasReport.

As one embodiment, the first UE variable is one VarLogMeasReport-r19.

As one embodiment, the first UE variable is one VarLogMeasReport-r20.

As one embodiment, the first UE variable only comprises the first condition.

As one embodiment, the first UE variable comprises a plurality of conditions comprising the first condition.

As one embodiment, the first UE variable comprises the first condition and the configuration information of the first cell.

As one embodiment, the first UE variable comprises the first condition and indication information associated with the configuration information of the first cell.

As one embodiment, before the first signaling is received, the first UE variable is configured by a first RRC message.

As one embodiment, before the first signaling is received, the first UE variable is predefined.

As one embodiment, before the first signaling is received, the first UE variable is released.

### Embodiment 12

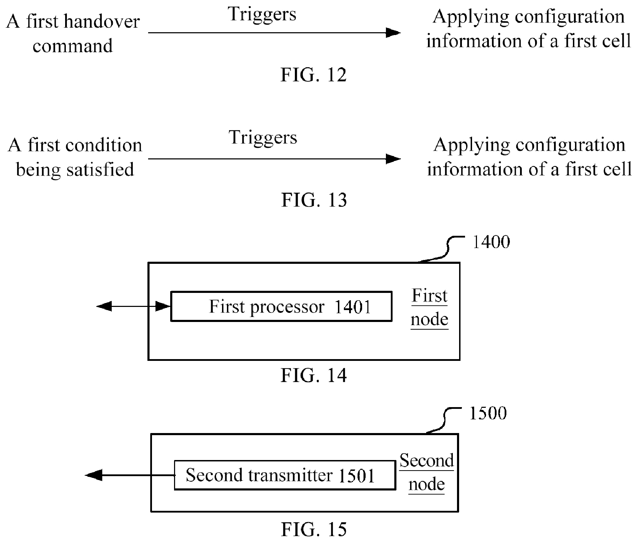

Embodiment 12 illustrates a schematic diagram of a first handover command triggering the behavior of applying configuration information of a first cell according to one embodiment of the present application, as shown in FIG. 12.

In Embodiment 12, after first signaling is received, a recipient of the first signaling receives the first handover command, wherein the first handover command triggers the behavior of applying the configuration information of the first cell.

As one embodiment, after the first signaling is received and before the first handover command is received, one measurement report is sent.

As one sub-embodiment of the above embodiment, after the first signaling is received and before the first handover command is received, at least one measurement report is sent.

As one sub-embodiment of the above embodiment, the one measurement report triggers the first handover command.

As one sub-embodiment of the above embodiment, in response to a first measurement report being received, the first handover command is sent.

As one sub-embodiment of the above embodiment, in response to a first condition being satisfied, the one measurement report is sent.

As one sub-embodiment of the above embodiment, the one measurement report is periodically sent.

As one sub-embodiment of the above embodiment, the one measurement report is an L3 measurement report.

As one sub-embodiment of the above embodiment, the one measurement report is an L1 measurement report.

As one sub-embodiment of the above embodiment, the one measurement report is any one of the L1 measurement report and the L3 measurement report.

As one sub-embodiment of the above embodiment, the one measurement report is sent through a PUSCH.

As one sub-embodiment of the above embodiment, the one measurement report is sent through an RRC message.

As one sub-embodiment of the above embodiment, the one measurement report is sent through a PUCCH.

As one sub-embodiment of the above embodiment, the one measurement report is sent through UCI.

As one sub-embodiment of the above embodiment, the one measurement report is sent through a MAC CE.

As one sub-embodiment of the above embodiment, the one measurement report is sent through an SRB1.

As one sub-embodiment of the above embodiment, the one measurement report is sent through an SRB3.

As one sub-embodiment of the above embodiment, the one measurement report comprises a measurement result associated with the first condition.

As one sub-embodiment of the above embodiment, the one measurement report comprises an identity identifier of the first cell.

As one sub-embodiment of the above embodiment, the one measurement report is one piece of UCI.

As one sub-embodiment of the above embodiment, the one measurement report is one MeasurementReport message.

As one embodiment, in response to the first handover command being received, the configuration information of the first cell is applied.

As one embodiment, in response to the first handover command being received, residing on the first cell is performed.

As one embodiment, in response to the first handover command being received, handover to the first cell is performed.

As one embodiment, in response to the first handover command being received, connecting to the first cell is performed.

As one embodiment, in response to the first handover command being received, disconnecting from a serving cell is performed.

As one embodiment, in response to the first handover command being received, a first timing advance command is applied; and the first signaling comprises the first timing advance command.

As one sub-embodiment of the above embodiment, the first timing advance command is one Timing Advance Command (TAC).

As one sub-embodiment of the above embodiment, the first timing advance command is not set to a maximum value.

As one sub-embodiment of the above embodiment, the first timing advance command indicates a TA.

As one embodiment, in response to the first handover command being received, a timer T304 is started; and in response to target signaling being received, the timer T304 is stopped.

As one embodiment of the above embodiment, in response to the first handover command being received, the target signaling starts to be monitored on a second cell.

### Embodiment 13

Embodiment 13 illustrates a schematic diagram of a first condition being satisfied triggering the behavior of applying configuration information of a first cell according to one embodiment of the present application, as shown in FIG. 13.

In Embodiment 13, the first condition being satisfied triggers the behavior of applying the configuration information of the first cell.

As one embodiment, the first condition is one CHO execution condition.

As one sub-embodiment of the above embodiment, the CHO execution condition is indexed by one condReconfigId.

As one embodiment, the first condition is one LTM execution condition.

As one sub-embodiment of the above embodiment, the LTM execution condition is indexed by one LTM-CandidateId.

As one embodiment, the first condition is one CPC execution condition.

As one sub-embodiment of the above embodiment, the CPC execution condition is indexed by one condReconfigId.

As one embodiment, in response to the first condition being satisfied, a MAC sublayer of a first node sends a third indication to an RRC sublayer of the first node; in response to the RRC sublayer of the first node receiving the third indication, the configuration information of the first cell is applied; and the first condition is one LTM execution condition.

As one embodiment, in response to the first condition being satisfied, the configuration information of the first cell is applied; and the first condition is one CHO execution condition, or the first condition is one CPC execution condition.

As one embodiment, within a time interval from the first condition being satisfied to the behavior of applying the configuration information of the first cell, the first node does not send any measurement report.

As one embodiment, within the time interval from the first condition being satisfied to the behavior of applying the configuration information of the first cell, the first node does not receive any handover command.

As one embodiment, in response to the configuration information of the first cell being applied, disconnecting from a serving cell is performed.

As one embodiment, in response to the application of the configuration information of the first cell being completed, disconnecting from the serving cell is performed.

### Embodiment 14

Embodiment 14 illustrates a structural block diagram of a processing apparatus used in a first node according to one embodiment of the present application, as shown in FIG. 14. In FIG. 14, a processing apparatus 1400 in the first node comprises a first processor 1401.

The first processor 1401, receives a first RRC message, wherein the first RRC message is configured with at least one condition, and the first RRC message comprises configuration information of a first cell; receives first signaling, wherein the first signaling indicates a first condition, and the first signaling is radio signaling of a protocol layer under an RRC sublayer; and applies the configuration information of the first cell.

In Embodiment 14, the first condition is one among the at least one condition; the behavior of applying the configuration information of the first cell depends on the first condition being satisfied; and any among the at least one condition is associated with the configuration information of the first cell.

As one embodiment, the first RRC message configures one condition identifier for each condition in the at least one condition, and the first signaling comprises a condition identifier of the first condition.

As one embodiment, the first condition comprises a measurement result for the first cell being greater than a first target threshold; the first RRC message is used for determining that the first target threshold is a first value, and the first RRC message comprises the first value; and the first signaling is used for determining that the first target threshold is a second value, and the first signaling indicates the second value.

As one embodiment, the first signaling indicates a second condition, and the second condition is one among another at least one condition; the first RRC message is configured with the another at least one condition, and the first RRC message comprises configuration information of a second cell; and any among the another at least one condition is associated with the configuration information of the second cell.

As one embodiment, the first processor 1401, receives second signaling, wherein the second signaling indicates a third condition, and the third condition is one among the at least one condition; and removes the first condition from the at least one condition in response to the second signaling being received.

As one embodiment, the first processor 1401 initiates a first measurement reporting process in response to a fourth condition being satisfied; and stops the first measurement reporting process in response to the first signaling being received, wherein the fourth condition is applied before the first signaling is received; and the fourth condition is one among the at least one condition.

As one embodiment, the first processor 1401 updates the first condition in a first UE variable in response to the first signaling being received, wherein the first UE variable comprises at least the former of the first condition and the configuration information of the first cell.

As one embodiment, the first processor 1401 receives a first handover command after the first signaling is received, wherein the first handover command triggers the behavior of applying the configuration information of the first cell.

As one embodiment, the first condition being satisfied triggers the behavior of applying the configuration information of the first cell.

As one embodiment, the first processor 1401 comprises at least one of an antenna 452 or a receiving device 454 or a multi-antenna receiving processor 458 or a receiving processor 456 or a controller/processor 459 or a memory 460 or a data source 467 in FIG. 4 of the present application.

As one embodiment, the first processor 1401 comprises at least the antenna 452 and the receiving device 454 in FIG. 4 of the present application.

As one embodiment, the first UE variable is set by the first processor 1401.

As one embodiment, the first UE variable is set by the memory 460 in the processor 1401.

As one embodiment, the first UE variable is set by the controller/processor 459 of the processor 1401.

### Embodiment 15

Embodiment 15 illustrates a structural block diagram of a processing apparatus used in a second node according to one embodiment of the present application, as shown in FIG. 15. In FIG. 15, a processing apparatus 1500 in the second node comprises a second transmitter 1501.

The second transmitter 1501, sends a first RRC message, wherein the first RRC message is configured with at least one condition, and the first RRC message comprises configuration information of a first cell; and sends first signaling, wherein the first signaling indicates a first condition, and the first signaling is radio signaling of a protocol layer under an RRC sublayer, wherein a recipient of the first signaling applies the configuration information of the first cell.

In Embodiment 15, the first condition is one among the at least one condition; the behavior of applying the configuration information of the first cell depends on the first condition being satisfied; and any among the at least one condition is associated with the configuration information of the first cell.

As one embodiment, the first RRC message configures one condition identifier for each condition in the at least one condition, and the first signaling comprises a condition identifier of the first condition.

As one embodiment, the first condition comprises a measurement result for the first cell being greater than a first target threshold; the first RRC message is used for determining that the first target threshold is a first value, and the first RRC message comprises the first value; and the first signaling is used for determining that the first target threshold is a second value, and the first signaling indicates the second value.

As one embodiment, the first signaling indicates a second condition, and the second condition is one among another at least one condition; the first RRC message is configured with the another at least one condition, and the first RRC message comprises configuration information of a second cell; and any among the another at least one condition is associated with the configuration information of the second cell.

As one embodiment, the second transmitter 1501 sends second signaling, wherein the second signaling indicates a third condition, and the third condition is one among the at least one condition; and the recipient of the first signaling removes the first condition from the at least one condition in response to the second signaling being received.

As one embodiment, in response to a fourth condition being satisfied, the recipient of the first signaling initiates a first measurement reporting process; and the recipient of the first signaling stops the first measurement reporting process in response to the first signaling being received, wherein the fourth condition is applied before the first signaling is received; and the fourth condition is one among the at least one condition.

As one embodiment, in response to the first signaling being received, the recipient of the first signaling updates the first condition in a first UE variable, wherein the first UE variable comprises at least the former of the first condition and the configuration information of the first cell.

As one embodiment, the second transmitter 1501 sends a first handover command after the first signaling is sent, wherein the first handover command triggers the behavior of applying the configuration information of the first cell.

As one embodiment, the first condition being satisfied triggers the behavior of applying the configuration information of the first cell.

As one embodiment, the second transmitter 1501 comprises at least one of an antenna 420 or a receiving device 418 or a multi-antenna receiving processor 472 or a receiving processor 470 or a controller/processor 475 or a memory 476 in FIG. 4 of the present application.

As one embodiment, the second transmitter 1501 comprises at least the antenna 420 and the receiving device 418 in FIG. 4 of the present application.

### Embodiment 16

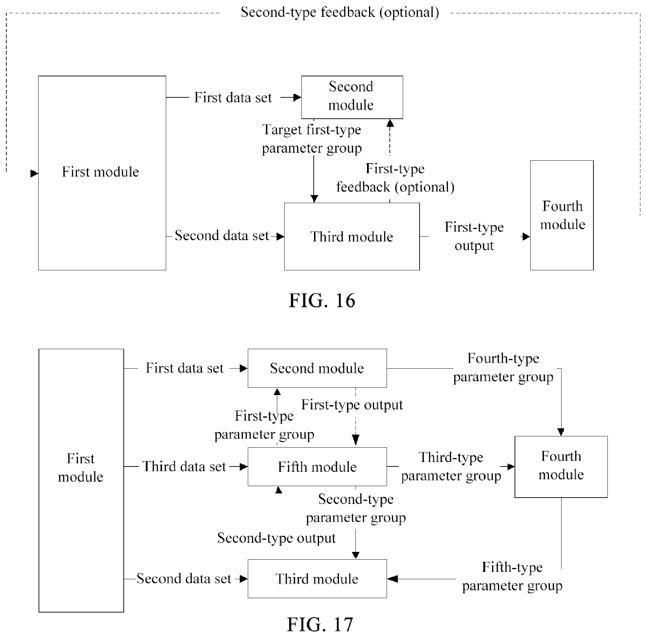

Embodiment 16 illustrates a schematic diagram of an artificial intelligence processing system according to one embodiment of the present application, as shown in FIG. 16. FIG. 16 comprises a first module, a second module, a third module, and a fourth module.

In Embodiment 16, the first module sends a first data set to the second module, the second module generates a target first-type parameter group according to the first data set, the second module sends the generated target first-type parameter group to the third module, and the third module processes a second data set using the target first-type parameter group to obtain a first-type output and then sends the first-type output to the fourth module.

As one embodiment, the first module, the second module, the third module, and the fourth module all belong to a first node.

The above method avoids air interface signaling interaction and shortens a transmission delay.

As one embodiment, the first module, the second module, the third module, and the fourth module belong to the first node and a second node.

As one embodiment, the first module belongs to the first node, and the second module, the third module, and the fourth module all belong to the second node.

The above method balances the hardware complexity and the transmission delay of the first node.

As one embodiment, the first module, the second module, the third module, and the fourth module belong to OAM to which the first node and the second node belong.

As one embodiment, the first module belongs to the first node, and the second module, the third module, and the fourth module all belong to OAM to which the second node belongs.

As one embodiment, the first module, the second module, the third module, and the fourth module all belong to the second node.

As one embodiment, the first module, the second module, the third module, and the fourth module all belong to OAM to which the second node belongs.

The above method balances hardware complexity of the first node and accuracy of the first-type output.

As one embodiment, the first module is used for data collection.

As one embodiment, the first module generates at least one of the first data set or the second data set according to the previous measurement.

As one embodiment, the first module sends the measurement result of the previous measurement; and the first module belongs to the first node.

As one embodiment, at least one of the first data set or the second data set is transmitted through a Uu interface.

As one embodiment, at least one of the first data set or the second data set is transmitted through an inter-module interface.

As one embodiment, at least one of the first data set or the second data set comprises a movement direction of the first node.

As one embodiment, at least one of the first data set or the second data set comprises a movement speed of the first node.

As one embodiment, at least one of the first data set or the second data set comprises a movement path of the first node.

As one embodiment, at least one of the first data set or the second data set comprises the measurement result of the previous measurement.

As one embodiment, at least one of the first data set or the second data set comprises any among the at least one condition.

As one embodiment, the second module is used for model training.

As one embodiment, the first data set is training data, the second data set is inference data, the second module is used for training a model, and a trained model is described by the target first-type parameter group.

As one embodiment, the third module is used for model inference.

As one embodiment, the third module constructs a model according to the target first-type parameter group, then inputs the second data set into the constructed model to obtain the first-type output, and then sends the first-type output to the fourth module.

As one embodiment, the third module calculates an error between the first-type output and actual data to determine performance of the trained model; and the actual data is data that is received after the second data set and that is transmitted from the first module.

The above embodiments are particularly suitable for prediction-related cell handover.

The above embodiments are particularly suitable for prediction-related mobility management.

As one embodiment, the third module sends first-type feedback to the second module, and the first-type feedback is used for triggering recalculation or updating of the target first-type parameter group.

As one embodiment, the third module recovers a reference data set according to the first-type output, and an error between the reference data set and the second data set is used for generating the first-type feedback.

As one embodiment, the first-type feedback is used for reflecting performance of the trained model; and when the performance of the trained model cannot meet requirements, the second module recalculates the target first-type parameter group.

Typically, when the error is too large or has not been updated for too long, the performance of the trained model is considered to be unable to meet the requirements.

As one embodiment, the fourth module is one Actor.

As one embodiment, the fourth module receives the first-type output from the third module.

As one embodiment, the fourth module executes corresponding actions according to the first-type output.

As one embodiment, the fourth module sends second-type feedback to the first module, the second-type feedback is used for generating the first data set or the second data set, or the second-type feedback is used for triggering sending of the first data set or the second data set.

As one embodiment, the fourth module sends the second-type feedback to the first module, and the second-type feedback is used for triggering execution of the first-type output; and the second-type feedback comprises a first message.

As one embodiment, the behavior of executing the first-type output comprises the behavior of "applying configuration information of a first cell".

As one embodiment, the first-type output comprises a first RRC message.

As one embodiment, the first-type output comprises first signaling.

As one embodiment, the first-type output comprises a first condition.

As one embodiment, the first-type output comprises any among the at least one condition.

As one embodiment, the first-type output comprises a first target threshold.

As one embodiment, the first-type output comprises a first value.

As one embodiment, the first-type output comprises a second value.

As one embodiment, the first-type output comprises a second condition.

As one embodiment, the first-type output comprises second signaling.

As one embodiment, the first-type output comprises a third condition.

As one embodiment, the first-type output comprises a fourth condition.

As one embodiment, the first-type output comprises a first UE variable.

As one embodiment, the first-type output comprises a first handover command.

As one embodiment, the phrase "a first parameter set depends on a previous measurement" means that: an input of the artificial intelligence processing system depends on the previous measurement, and the first parameter set is an output of the artificial intelligence processing system.

As one embodiment, Embodiment 16 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 16.

### Embodiment 17

Embodiment 17 illustrates a schematic diagram of an artificial intelligence processing system according to another embodiment of the present application, as shown in FIG. 17. FIG. 17 comprises a first module, a second module, a third module, a fourth module, and a fifth module.

In Embodiment 17, the first module sends a first data set to the second module, the first module sends a second data set to the third module, the first module sends a third data set to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

As one embodiment, the first module, the second module, the third module, the fourth module, and the fifth module all belong to a first node.

The above method avoids air interface signaling interaction and shortens a transmission delay.

As one embodiment, any one of the first module, the second module, the third module, the fourth module, and the fifth module does not belong to the first node.

The above method reduces hardware complexity of the first node.

As one embodiment, at least the first module among the first module, the second module, the third module, the fourth module, and the fifth module belongs to the first node; and at least one of the first module, the second module, the third module, the fourth module, and the fifth module does not belong to the first node.

The above method balances the hardware complexity and the transmission delay of the first node.

As one embodiment, the first module is used for data collection.

As one embodiment, the first module is responsible for data collection.

As one embodiment, the first module has a data collection function.

As one embodiment, the second module is used for model training.

As one embodiment, the second module is responsible for model training.

As one embodiment, the second module has a model training function.

As one embodiment, the second module executes AI/ML model training.

As one embodiment, the second module executes validation.

As one embodiment, the second module executes testing.

As one embodiment, the second module generates model performance metrics.

As one embodiment, the second module is responsible for data preparation.

As one embodiment, the data preparation comprises at least one of data pre-processing or cleaning or formatting or transformation.

As one embodiment, the third module is used for inference.

As one embodiment, the third module has an inference function.

As one embodiment, the third module is responsible for inference.

As one embodiment, the fourth module is used for model storage.

As one embodiment, the fourth module has a model storage function.

As one embodiment, the fourth module is responsible for storing a trained model.

As one embodiment, the fourth module is responsible for storing a trained model that can be used for executing inference processing.

As one embodiment, the fifth module is used for management.

As one embodiment, the fifth module is responsible for management.

As one embodiment, the fifth module has a management function.

As one embodiment, the first data set is training data.

As one embodiment, the second data set is inference data.

As one embodiment, the third data set is monitoring data.

As one embodiment, the first-type parameter group comprises a monitoring output.

As one embodiment, the second-type parameter group comprises a management instruction.

As one embodiment, the second-type parameter group is used for a fine-tune operation of an inference function.

As one embodiment, the second-type parameter group comprises an identifier of a model.

As one embodiment, the second-type parameter group is used for selecting a model.

As one embodiment, the second-type parameter group is used for switching a model.

As one embodiment, the second-type parameter group is used for activating/deactivating a model.

As one embodiment, the second-type parameter group is used for falling back from an AI-ML operation to a non-AI-ML operation.

As one embodiment, the third-type parameter group comprises a model transfer request.

As one embodiment, the third-type parameter group comprises a model delivery request.

As one embodiment, the fourth-type parameter group comprises a trained model.

As one embodiment, the fourth-type parameter group comprises an updated model.

As one embodiment, the fourth-type parameter group indicates an identifier of a model.

As one embodiment, the fifth-type parameter group comprises model transfer.

As one embodiment, the fifth-type parameter group comprises model delivery.

As one embodiment, the fifth-type parameter group indicates an identifier of a model.

As one embodiment, a first-type output comprises a monitoring output.

As one embodiment, the first-type output exists.

As one embodiment, the first-type output does not exist.

As one embodiment, a second-type output comprises an inference output.

As one embodiment, the second-type output is used by the fifth module for monitoring performance of an AI/ML model.

As one embodiment, the second-type output is used by the fifth module for monitoring performance of an AI/ML function.

As one embodiment, the second-type output exists.

As one embodiment, the second-type output does not exist.

As one embodiment, the artificial intelligence processing system generates or assists in generating at least part of a first RRC message.

As one embodiment, the fifth module generates or assists in generating at least part of the first RRC message.

As one embodiment, the third module generates or assists in generating at least part of the first RRC message.

As one embodiment, the second-type output comprises at least part of the first RRC message.

As one embodiment, the artificial intelligence processing system generates or assists in generating first signaling.

As one embodiment, the fifth module generates or assists in generating the first signaling.

As one embodiment, the third module generates or assists in generating the first signaling.

As one embodiment, the second-type output comprises the first signaling

As one embodiment, the artificial intelligence processing system generates or assists in generating at least part of any among the at least one condition.

As one embodiment, the fifth module generates or assists in generating any among the at least one condition.

As one embodiment, the third module generates or assists in generating any among the at least one condition.

As one embodiment, the second-type output comprises any among the at least one condition.

As one embodiment, the artificial intelligence processing system generates or assists in generating a first target threshold.

As one embodiment, the fifth module generates or assists in generating the first target threshold.

As one embodiment, the third module generates or assists in generating the first target threshold.

As one embodiment, the second-type output comprises the first target threshold.

As one embodiment, the artificial intelligence processing system generates or assists in generating second signaling.

As one embodiment, the fifth module generates or assists in generating the second signaling.

As one embodiment, the third module generates or assists in generating the second signaling.

As one embodiment, the second-type output comprises the second signaling.

As one embodiment, the artificial intelligence processing system generates or assists in generating a first UE variable.

As one embodiment, the fifth module generates or assists in generating the first UE variable.

As one embodiment, the third module generates or assists in generating the first UE variable.

As one embodiment, the second-type output comprises the first UE variable.

As one embodiment, the first data set comprises any among the at least one condition.

As one embodiment, the second data set comprises any among the at least one condition.

As one embodiment, the third data set comprises any among the at least one condition.

As one embodiment, the first data set comprises at least part of information in any among the at least one condition.

As one embodiment, the second data set comprises at least part of information in any among the at least one condition.

As one embodiment, the third data set comprises at least part of information in any among the at least one condition.

As one embodiment, Embodiment 17 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 17.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The user equipment, terminal and UE of the present application include, but are not limited to drones, communication modules on drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes but is not limited to macro cellular base stations, micro cellular base stations, Femtocells, relay base stations, gNBs (NR nodes B), TRPs (Transmitter Receiver Points), and other wireless communication devices.

The above is only a preferred embodiment of the present application and is not used for limiting the scope of protection of the present application. Any modifications, equivalent replacements, improvements, etc. made within the spirit and principles of the present application should be comprised in the scope of protection of the present application.

## Claims

1. A first node for wireless communication, comprising:
a first processor, receiving a first RRC message, wherein the first RRC message is configured with at least one condition, and the first RRC message comprises configuration information of a first cell; receiving first signaling, wherein the first signaling indicates a first condition, and the first signaling is radio signaling of a protocol layer under an RRC sublayer; and applying the configuration information of the first cell,
wherein the first condition is one among the at least one condition; the behavior of applying the configuration information of the first cell depends on the first condition being satisfied; and any among the at least one condition is associated with the configuration information of the first cell.

2. The first node according to claim 1, wherein the first RRC message configures one condition identifier for each condition in the at least one condition, and the first signaling comprises a condition identifier of the first condition.

3. The first node according to claim 1 or 2, wherein the first condition comprises a measurement result for the first cell being greater than a first target threshold; the first RRC message is used for determining that the first target threshold is a first value, and the first RRC message comprises the first value; and the first signaling is used for determining that the first target threshold is a second value, and the first signaling indicates the second value.

4. The first node according to any one of claims 1 to 3, wherein the first signaling indicates a second condition, and the second condition is one among another at least one condition; the first RRC message is configured with the another at least one condition, and the first RRC message comprises configuration information of a second cell; and any among the another at least one condition is associated with the configuration information of the second cell.

5. The first node according to any one of claims 1 to 4, comprising:
the first processor, receiving second signaling, wherein the second signaling indicates a third condition, and the third condition is one among the at least one condition; and removing the first condition from the at least one condition in response to the second signaling being received.

6. The first node according to any one of claims 1 to 5, comprising:
the first processor, initiating a first measurement reporting process in response to a fourth condition being satisfied; and stopping the first measurement reporting process in response to the first signaling being received,
wherein the fourth condition is applied before the first signaling is received; and the fourth condition is one among the at least one condition.

7. The first node according to any one of claims 1 to 6, comprising:
the first processor, updating the first condition in a first UE variable in response to the first signaling being received,
wherein the first UE variable comprises at least the former of the first condition and the configuration information of the first cell.

8. The first node according to any one of claims 1 to 7, comprising:
the first processor, receiving a first handover command after the first signaling is received,
wherein the first handover command triggers the behavior of applying the configuration information of the first cell.

9. The first node according to any one of claims 1 to 7, wherein the first condition being satisfied triggers the behavior of applying the configuration information of the first cell.

10. A second node for wireless communication, comprising:
a second transmitter, sending a first RRC message, wherein the first RRC message is configured with at least one condition, and the first RRC message comprises configuration information of a first cell; and sending first signaling, wherein the first signaling indicates a first condition, and the first signaling is radio signaling of a protocol layer under an RRC sublayer,
wherein a recipient of the first signaling applies the configuration information of the first cell; the first condition is one among the at least one condition; the recipient of the first signaling applying the configuration information of the first cell depends on the first condition being satisfied; and any among the at least one condition is associated with the configuration information of the first cell.

11. A method used in a first node for wireless communication, comprising:
receiving a first RRC message, wherein the first RRC message is configured with at least one condition, and the first RRC message comprises configuration information of a first cell; receiving first signaling, wherein the first signaling indicates a first condition, and the first signaling is radio signaling of a protocol layer under an RRC sublayer; and applying the configuration information of the first cell,
wherein the first condition is one among the at least one condition; the behavior of applying the configuration information of the first cell depends on the first condition being satisfied; and any among the at least one condition is associated with the configuration information of the first cell.

12. A method used in a second node for wireless communication, comprising:
sending a first RRC message, wherein the first RRC message is configured with at least one condition, and the first RRC message comprises configuration information of a first cell; and sending first signaling, wherein the first signaling indicates a first condition, and the first signaling is radio signaling of a protocol layer under an RRC sublayer,
wherein a recipient of the first signaling applies the configuration information of the first cell; the first condition is one among the at least one condition; the recipient of the first signaling applying the configuration information of the first cell depends on the first condition being satisfied; and any among the at least one condition is associated with the configuration information of the first cell.
